# EUROPEAN PATENT SPECIFICATION

(11) **EP 0 821 709 B1**
(45) Date of publication and mention of the grant of the patent: **31.10.2001**
(21) Application number: 96914954.1
(22) Date of filing: 18.04.1996
(51) Int. Cl.: C08K 5/00, C08L 73/00

(54) **POLYKETONE POLYMER COMPOSITION**
POLYKETONPOLYMER-ZUSAMMENSETZUNG
COMPOSITION POLYMERE DE POLYCETONE

(30) Priority: 19.04.1995 US 424840
(43) Date of publication of application: 04.02.1998
(73) Proprietor: SHELL INTERNATIONALE RESEARCH MAATSCHAPPIJ B.V., 2596 HR Den Haag (NL)
(72) Inventor: ASH, Carlton, Edwin, Sugarland, TX 77479 (US); WATERS, Dixie, Green, Houston, TX 77055 (US); WEINKAUF, Donald, Hill, Houston, TX 77007 (US)
(86) International application number: EP9601646
(87) International publication number: WO9633236

(56) References cited:
- EP-A- 0 289 077
- EP-A- 0 326 223
- EP-A- 0 654 469
- GB-A- 2 253 398
- US-A- 4 024 104
- US-A- 4 859 726
- US-A- 5 082 885

## Description

This invention relates to polyketone polymer compositions. More particularly, this invention relates to polyketone polymer compositions containing a stabilizer acting against degradation by UV light.

Polymers of carbon monoxide and olefins generally referred to as polyketones or polyketone polymers are well known in the art. The class of linear alternating polymers of carbon monoxide and at least one ethylenically unsaturated compound are of particular interest among polyketone polymers. This class of polymers is disclosed in numerous patent documents, exemplified by US-A-4880865 and US-A-4818811.

The properties of polyketone polymers make them suitable for many applications. However, as is the case with most polymers, they can exhibit a deterioration of physical properties upon exposure to ultraviolet (UV) light. In polyketones, such degradation can result in a loss of physical properties such as ductility, strength and toughness.

It is desirable to prevent or inhibit the deterioration of polymer properties by stabilizing the polymer toward the adverse effects of UV radiation. There are a number of commercially available UV stabilizers which can be employed with varied levels of effectiveness in various combinations. Such stabilizers include radical inhibitors such as hindered amine light stabilizers (HALS) and hindered phenols, excited state quenchers, peroxide decomposers, metal deactivators and UV absorbing additives. In many cases, ultraviolet stabilization is accomplished through a combination of such stabilizers.

For polyketone polymers previously explored stabilization regimens include the approach proposed in US-A-4954548. In that case, the use of a combination of carbon black and a diphenylamine stabilizer was preferred. US-A-5149733 proposes the use of a combination of carbon black and a sterically hindered thiobisphenol stabilizer. Stabilization of polyketone polymers with UV absorbing carbon black, however, suffers from disadvantages which include a fixed part colour. The high loadings required can also adversely affect polymer physical properties and melt processing stability can also be reduced. It is, therefore, desirable to seek alternative or new materials to more efficiently stabilize polyketone polymers.

Non-pigmenting UV absorbing additives are known in the art. These additives protect polymers by absorbing harmful UV energy while containing functional groupings which efficiently dissipate the energy in the form of heat. US-A-5019614 proposes the use of UV absorbers such as hydroxybenzotriazoles as stabilizers for polyketone polymers. For example, in the case of hydroxybenzotriazole stabilizers, energy absorbed by the additive is readily dissipated by the tautomerization of a hydroxyl group and an adjacent triazole group. In this case, the intermolecular hydroxyl group and triazole group function together synergistically to provide stabilization and constitute a "functional grouping". Stabilization of polyketone polymers by UV absorber additive in the prior art contain only one of these functional groupings.

The subject matter of earlier filed, non-prepublished patent application EP-A-654469 relates to specific o-hydroxyphenyl-s-triazines which comprise at least two alkoxyophenyl substituents and their use as stabiliser in organic polymers, for example alternating and statistical carbon monoxide/alkylene copolymers.

During further development work using polyketone polymer compositions containing UV absorbing additives melt processing techniques, such as extrusion and injection moulding, were applied in order to process the compositions into articles of manufacture. Unfortunately, it was experienced that during the melt processing some degradation of the polyketones occurred so that there was a loss of mechanical properties such as ductility and toughness. Therefore, it would be desirable to find UV absorbing additives which provide an improvement in the melt stability of the compositions.

Unexpectedly it has now been found that an improved melt stability of the polyketone polymer compositions can be achieved when as a UV stabilizer a compound is used which comprises in its molecular structure more than one UV absorbing-dissipating functional grouping. In addition it has been found that these compositions possessed an improved level of UV stability and an improved colour performance. Furthermore, the stabilizers now proposed have a low level of volatility so that a loss of stabilizer by evaporation during melt processing, if any, will be minimised.

Accordingly, the present invention relates to a polymer composition comprising a polyketone polymer, which is a linear alternating polymer of carbon monoxide and an ethylenically unsaturated hydrocarbon, and intimately mixed therewith a stabilizing quantity of a stabilizer having at least two ultraviolet absorbing-dissipating functional groupings in its molecular structure, which ultraviolet absorbing dissipating functional groupings are selected from the group consisting of hydroxybenzotriazoles, hydroxybenzophenones, oxanilides, diphenyl cyanoacrylates, phenyl salicylates, hydroxyphenyltriazines and combinations thereof.

In addition, the invention relates to a process comprising intimately mixing the polyketone polymer with a stabilizing quantity of the said stabilizer having at least two ultraviolet absorbing-dissipating functional groupings in its molecular structure.

The invention also relates to the use of the said stabilizer having at least two ultraviolet dissipating functional groupings in its molecular structure for improving the UV stability of the polyketone polymer.

The subject matter of earlier filed, non-prepublished patent application EP-A-669330 relates to specific dimeric 2-(2-hydroxyphenyl)benzotriazoles and their use as stabiliser in organic polymers, for example alternating and statistical carbon monoxide/alkylene copolymers. EP-A-669330 was filed for the contracting states Belgium, Germany, France, Great-Britain, Italy and The Netherlands. In these contracting states the protection for the present invention is limited to the extent that the polyketone polymer has a limiting viscosity number from 0.5 to 10 dl/g, as measured in m-cresol at 60 °C in a standard capillary viscosity measuring device.

Polyketone polymer compositions with improved melt stability and improved UV stability are useful in a range of engineering thermoplastic applications such as in automotive structural parts and members. On the other hand, nearly any polyketone polymer article which faces exposure to sunlight can obtain some benefit by UV stabilization. The materials useful in practicing this invention include polyketone polymer and a UV stabilizer having more than one UV absorbing-dissipating functional grouping. Other polymer additives well known in the art can also be used in conjunction with polyketone compositions thus prepared. For instance, fillers, extenders, lubricants, pigments, plasticizers and other polymeric materials can be added to the polyketone compositions being stabilized to improve or otherwise alter the properties of the compositions.

The polyketones for use in this invention are typically linear alternating copolymers of carbon monoxide and at least one ethylenically unsaturated compound. Thus, the polyketone polymers are typically of a linear alternating structure which means that they typically contain one molecule of carbon monoxide for each molecule of the ethylenically unsaturated compound. Ethylenically unsaturated compounds comprise typically up to 20 carbon atoms and include compounds which consist exclusively of carbon and hydrogen and compounds which in addition comprise hetero atoms, such as unsaturated esters, ethers and amides. Unsaturated hydrocarbons are preferred. Examples of suitable ethylenically monomers are aliphatic α-olefins, such as ethene, propene and butene-1, cyclic olefins such as cyclopentene, aromatic compounds, such as styrene and α-methylstyrene and vinyl esters, such as vinyl acetate and vinyl propionate. The preferred polyketone polymers are linear alternating polymers of carbon monoxide and ethene or linear alternating polymers of carbon monoxide, ethene and another ethylenically unsaturated compound of at least 3 carbon atoms, particularly an α-olefin such as propene or butene-1.

When the preferred polyketone polymers of carbon monoxide, ethene and another ethylenically unsaturated compound are employed, there will be within the polymer typically at least 2 units incorporating a moiety of ethene for each unit incorporating a moiety of the other ethylenically unsaturated compound(s). Preferably, there will be from 10 units to 100 units incorporating a moiety of ethene for each unit incorporating a moiety of the other ethylenically unsaturated compound(s). The polymer chain of preferred polyketone polymers is therefore represented by the repeating formula 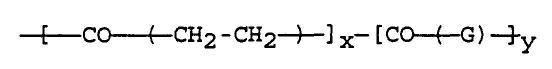 where G is the moiety of the ethylenically unsaturated compound of at least 3 carbon atoms polymerized through the ethylenic unsaturation and the ratio of y:x is typically no more than 0.5. When linear alternating polymers of carbon monoxide and ethene are employed in the compositions of the invention, there will be no second ethylenically unsaturated compound present and the polymers are represented by the above formula wherein y is zero. When y is other than zero the -CO(̵CH₂-H₂-)̵ units and the -CO(̵G)̵ units are found randomly throughout the polymer chain, and preferred ratios of y:x are from 0.01 to 0.1. The precise nature of the end groups does not appear to influence the properties of the polymer to any considerable extent so that the polymers are fairly represented by the formula for the polymer chains as depicted above.

The polyketone polymers of number average molecular weight from 1000 to 200,000, particularly those of number average molecular weight from 20,000 to 90,000 as determined by gel permeation chromatography are of particular interest. The physical properties of the polymer will depend in part upon the molecular weight, whether the polymer is based on a single or on a plurality of ethylenically unsaturated compounds and on the nature and the proportion of the ethylenically unsaturated compounds. Typical melting points for the polymers are from 175 °C to 300 °C, more typically from 210 °C to 270 °C, as determined by differential scanning calorimetry. The polymers have typically a limiting viscosity number (LVN), measured in m-cresol at 60 °C in a standard capillary viscosity measuring device, from 0.5 dl/g to 10 dl/g, more typically from 0.8 dl/g to 4 dl/g.

Preferred methods for the production of the polyketone polymers are known from US-A-4808699 and US-A-4868282. US-A-4808699 teaches the production of polyketone polymers by contacting ethene and carbon monoxide in the presence of a catalyst comprising a Group VII metal compound, an anion of a nonhydrohalogenic acid with a pKa less than 6 and a bidentate phosphorus, arsenic or antimony ligand. US-A-4868282 teaches the production of polyketone polymers by contacting carbon monoxide and ethene in the presence of one or more hydrocarbons having an ethylenically unsaturated group with a similar catalyst.

The polyketone polymers are stabilized against degradation caused by exposure to UV radiation by forming an intimate mixture with UV stabilizers having more than one UV absorbing-dissipating functional grouping. As indicated hereinbefore, a UV absorbing-dissipating functional grouping comprises a functional group which cooperates with another functional group or portion thereof such that it absorbs UV energy across a range of frequencies which includes the range between 280 and 380 nm and dissipates the UV energy such that the additive is repeatedly able to absorb and dissipate UV energy in the form of heat. More particularly, UV absorption in the range 290-320 nm is considered most important to stabilizing polyketones towards the adverse effects of terrestrial sunlight. Any such combination of groups as defined hereinbefore in the same additive molecule may prove useful. Hydroxybenzotriazoles are preferred groupings. The most preferred grouping comprises the structure of 1-(benzotriazol-2-yl)-2-hydroxyarenes, in particular 1-(benzotriazol-2-yl)-2-hydroxybenzene. Bis[2-hydroxy-5-methyl-3-(benzotriazol-2-yl)phenyl]methane is a stabilizer comprising the most preferred groupings.

The UV stabilizers of this invention are comprised of at least two UV absorbing-dissipating functional groupings. Such substances can be represented by the structural formula:

G¹-R¹-G²-(R^{x}-G^{y})ₙ

wherein n is 0, 1, 2, 3 or 4, G¹, G², and G^{y} are each independently a UV absorbing-dissipating functional grouping and R¹ and R^{x} may be a bridging group or a chemical bond. Dimers, which are molecules containing two functional groupings (G), are preferred. These substances have the following structural formula:

G¹-R¹-G²

The bridging groups (R), if any, may contain exclusively carbon and hydrogen atoms but they may also contain heteroatoms, such as nitrogen, chlorine and oxygen. They comprise typically up to 20 carbon atoms, more typically up to 10 carbon atoms. Preferred bridging groups are alkylene groups, such as ethylene, 1,3-propylene, 1,4-and 2,3-butylene groups. Alternatively, the bridging group may comprise a phenylene group, such as in -CH₂-φ-CH₂-, wherein φ denotes a 1,4-phenylene group. A preferred bridging group is the methylene (-CH₂-) group.

Functional groups beyond those groups which comprise the UV absorbing-dissipating groupings can also be present to adjust the overall physical and/or chemical properties of the stabilizer. For example, pendent organic or inorganic groups may be present as needed to modify such properties as the spectral absorption maxima, volatility, or compatibility. Hydrogen and C₁-C₉ alkyl and alkoxy groups are typically additional members or groups affixed to the remainder of the stabilizer molecule of this invention.

The most preferred stabilizers are hydroxybenzotriazole dimers of the general formula: 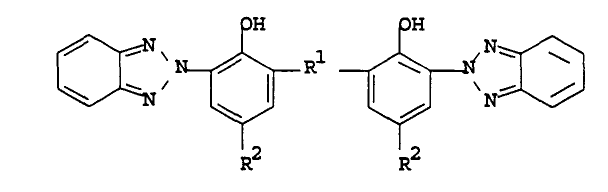 wherein R¹ is as defined hereinbefore and the groups R² independently are hydrocarbyl groups, in particular alkyl groups, more in particular C₁₋₂₀ alkyl groups, most in particular C₁₋₈ alkyl groups.

Dimers and trimers of substituted 1,3,5-triazines are examples of other dimeric and trimeric stabilizers within the scope of this invention.

It should also be noted that other stabilizers of a similar structure can be useful in this regard. Such stabilizers can be fashioned such that the UV absorbing-dissipating functional groupings within a stabilizer are different moieties such as a mixture of hydroxybenzotriazole and a hydroxybenzophenone.

For example, such stabilizers may be of the general formula 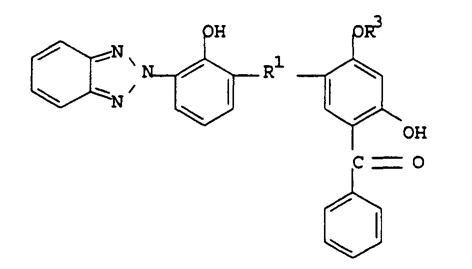 wherein R¹ is as defined hereinbefore and R³ is a C₁₋₁₀ aliphatic, cycloaliphatic or aryl group.

Broadly speaking, the process of the invention involves dispersing a stabilizing amount of UV stabilizer into a polyketone polymer to form a mixture. A stabilizing amount of stabilizer is a quantity which is sufficient to prevent UV degradation of the polyketone. This quantity is generally between 0.1 and 10 wt% (based on the weight of the polyketone). Preferably, between 0.2 and 5 wt% is added. It is most preferred that between 0.4 and 2 wt% is added.

The stabilizer may be incorporated into the polyketone polymer at any stage of its processing, preferably prior to being subjected to elevated temperature. Any of the conventional methods suitable for forming an intimate mixture of the polymer and additive may be used to form the mixture so long as the method results in a substantially uniform blend of the composition components. Such methods are in general melt processing methods and may include dry blending of the polymer and stabilizer in a finely divided form followed by melt extrusion of the mixture. Techniques such as solvent deposition may also be used as well as other methods known by those skilled in the art.

The stabilized polyketones formed in this manner are useful in the manufacture of fibers, sheets, films, laminates, containers, wire and cables of established utility which are produced by conventional methods such as melt spinning, extrusion, injection moulding and thermoforming. The compositions are particularly useful in applications where the finished product is likely to be exposed directly to ultraviolet light such as structural parts produced for external automotive applications.

The following nonlimiting examples and tables further illustrate the invention. In each example, weight percent is on the basis of the weight of polymer unless otherwise indicated.

### Examples 1-3 (Example 3 for comparison)

Samples of a linear alternating polymer of carbon monoxide, ethene, and a minor amount of propene having a melting point of 220 °C and a limiting viscosity number of 1.8 dl/g were admixed with 1 %w of a UV stabilizer. In Example 1 the UV stabilizer tested was bis[2-hydroxy-5-methyl-3-(benzotriazol-2-yl)phenyl]methane (commercially available from Fairmount Chemical Co. under the Trademark MIXXIM BB 200); in Example 2 the UV stabilizer tested was bis[2-hydroxy-5-octyl-3-(benzotriazol-2-yl)phenyl]methane (commercially available from Fairmount Chemical Co. under the Trademark MIXXIM BB 100); in Example 3 the UV stabilizer tested for comparison was 2-(benzotriazol-2-yl)-4,6-bis(1,1-dimethylpropyl)phenol (commercially available from Ciba-Geigy under the Trademark TINUVIN 328). The mixtures were each melt compounded into pellets on a 25 mm twin screw extruder applying a melt temperature of 255 °C. Test specimens were injection moulded in the form of 1.55 mm (1/16 inch) thick, type V, ASTM D638 tensile bars. These test specimens were then submitted to accelerated UV aging. Accelerated aging was carried out by exposing the test specimens to a fluorescent light source in a weatherometer. A QUV accelerated weathering tester used for these studies was equipped with UV-340A fluorescent bulbs. The conditions of the accelerated aging test used continuous UV exposure without any water condensation periods. The temperature of a black panel during the tests was 50 °C. This accelerated aging protocol is referred to herein as QUV aging.

Photodegradation leads to a loss of elongation to break. The ability to cold-draw is an important parameter related to polymer ductility and impact performance. Under the test conditions herein employed, polyketones exhibit this behaviour at 50% or more elongation. Specimens experiencing a reduction in break strain to values of 50% or less typically show an inability to neck or cold-draw. Therefore specimens with break strains of 50% or less were deemed failures in this test.

The break strain of the test specimens was measured using a commercial tensile tester and using a grip to grip distance of 25.4 mm (1.00 inches), a gauge length of 16.5 mm (0.65 inches), and a crosshead speed of 12.7 mm/min (0.5 in/min). Table 1 summarizes the performance of each of the samples on a pass / fail basis with the elongation at break values denoted in parentheses. This example shows that the dimer hydroxybenzotriazole additives (Examples 1 and 2) were superior to the monomer hydroxybenzotriazole additive (Example 3).

**Table 1.**

| Breakstrain*) before and after exposure to QUV ageing (hours) | | | | |
|---|---|---|---|---|
| Example | 0 hours | 168 hours | 500 hours | 925 hours |
| 1 | P (255) | P (180) | P (160) | P (135) |
| 2 | P (200) | P (135) | P (75) | P (52) |
| 3**) | P (165) | P (65) | F (50) | F (45) |

| | | | | |
|---|---|---|---|---|
| *) P = Pass, F = Fail, ( ) = break strain, %. | | | | |
| **) For comparison | | | | |

### Example 4, 5 (Example 4 for comparison)

In this example a linear alternating polymer of carbon monoxide, ethene, and a minor amount of propene having a melting point of 200 °C and a limiting viscosity number (LVN) of 1.8 dl/g was combined with 1.0 wt% of bis[2-hydroxy-5-methyl-3-(benzotriazol-2-yl)phenyl]-methane (Example 5). The mixture was melt extruded into pellets and then injection moulded into test specimens. An identical polyketone polymer without the UV stabilizer was used as a control (Example 4). Test specimens which were used were 3.18 mm (1/8 inch), type I, ASTM D638 tensile specimens. The test specimens were submitted to South Florida aging. Tensile testing of all tensile specimens used a crosshead speed of 50.8 mm/minute (2.0 inches/minute) and a gauge length of 114 mm (4.50 inches) which was also the grip to grip distance. Table 2 presents the elongation at break in percentage of initial gauge length for samples before and after exposure to terrestrial sunlight. This example illustrates the dramatic stabilizing influence of a dimer benzotriazole additive for maintaining the elongation at break in polyketone polymers.

**Table 2.**

| South Florida Aging of Polyketone Polymer. Break Strain, % after South Florida Exposures | | | | |
|---|---|---|---|---|
| Example | 0 Month | 1 Month | 3 Months | 6 Months |
| 4*) | 300% | 1% | 0.6% | 0.3% |
| 5 | 300% | 285% | 285% | 285% |

| | | | | |
|---|---|---|---|---|
| *)for comparison | | | | |

### Examples 6 and 7 (Example 7 for comparison)

In these examples a powder of a linear alternating polymer of carbon monoxide, ethene and a minor amount of propene with a limiting viscosity number (LVN) of 1.8 dl/g and a melting point of 220 °C was combined with 1 %w of a UV-stabilizer. In Example 6 the UV stabilizer tested was bis[2-hydroxy-5-octyl-3-(benzotriazol-2-yl)-phenyl]methane and in Example 7 the UV stabilizer tested for comparison was 2-(benzotriazol-2-yl)-4,6-bis(1,1-dimethylpropyl)phenol. The mixtures were melt compounded using a 30 mm twin screw extruder and then compression moulded into 0.76 mm (0.030 inch) thick disks for melt rheology testing. Melt viscosity measurements were made using a parallel plate viscometer operated at 275 °C and a shear rate of 1 rad/second.

The complex viscosity of the composition after 28 minutes at 275 °C was increased to 10,000 Pa.s in Example 6 and 14,000 Pa.s in Example 7. This shows that under melt processing conditions the compositions according to the invention have a superior stability compared with the compositions according to the prior art.

### Examples 8 and 9 (Example 9 for comparison)

In these examples a linear alternating polymer of carbon monoxide, ethene and a minor amount of propene with a limiting viscosity number of 1.8 dl/g and a melting point of 220 °C was combined with 1 %w of a UV stabilizer. In Example 8 the UV stabilizer tested was bis[2-hydroxy-5-octyl-3-(benzotriazol-2-yl)phenyl]methane and in Example 9 the UV stabilizer tested for comparison was 2-(5-chloro-benzotriazol-2-yl)-4-methyl-6-(1,1-dimethylethyl)phenol (commercially available from Ciba-Geigy under the Trademark TINUVIN 326). The mixtures were melt compounded, injection moulded into test specimen, subjected to QUV ageing and further tested as described in Examples 1-3. The results are given in Table 3.

**Table 3.**

| Break strain (%) before and after exposure to UV ageing (hours) | | | |
|---|---|---|---|
| Example | 0 hours | 144 hours | 500 hours |
| 8 | 265 | 92 | 102 |
| 9 | 115 | 67 | 68 |

The yellowness index of the pellets after extrusion was measured using a Gardner Colorgard System 2000 (Trademark) according to ASTM D-1925. A lower yellowness index is indicative for less discolouration of the polymer. The values found were 27.2 for the pellets of Example 8 and 39.4 for the pellets of Example 2.

Furthermore, samples of the pellets were compression moulded into 1-mm thick sheets by pressing at 250 °C for 0.5 minutes at 0.4 MPa and 1.5 minutes at 4 MPa pressure. Circular disks cut from the sheets were subjected to dynamic rheology testing, i.e. measurement of dynamic shear moduli, at a temperature of 272 °C using an angular frequency of 1 rad/s and the samples being held between aluminium disks at a distance of 0.9 mm. The cross-over time is defined as the time lapsed during the measurement until the loss factor (i.e. the quotient of the loss modulus and the storage modulus) equals 1. A higher cross-over time is indicative for a better melt processing stability. In Example 8 the cross-over time was 23 minutes and in Example 9 the cross-over time was less than 15 minutes.

From the above it appears that the compositions according to this invention are superior in UV ageing performance, colour formation and melt processing stability when compared with compositions in accordance with the prior art.

## Claims (Claims for the following Contracting State(s): DE, FR, GB, IT, NL)

1. A polymer composition comprising a polyketone polymer which is a linear alternating polymer of carbon monoxide and an ethylenically unsaturated hydrocarbon, having a limiting viscosity number measured in m-cresol at 60°C from 0.5 dl/g to 10 dl/g, and intimately mixed therewith a stabilizing quantity of a stabilizer having at least two ultraviolet absorbing-dissipating functional groupings in its molecular structure, which ultraviolet absorbing dissipating functional groupings are selected from the group consisting of hydroxybenzotriazoles, hydroxybenzophenones, oxanilides, diphenyl cyanoacrylates, phenyl salicylates, hydroxyphenyltriazines and combinations thereof.

2. A composition as claimed in claim 1, wherein each of said ultraviolet absorbing-dissipating functional groupings are the same.

3. A composition as claimed in claim 1 or 2, wherein said stabilizer comprises two ultraviolet absorbing-dissipating functional groupings.

4. A composition as claimed in any of claims 1-3, wherein the ultraviolet absorbing dissipating functional groupings are selected from the group consisting of 1-(benzotriazol-2-yl)-2-hydroxyarenes.

5. A composition as claimed in any of claims 1-4, wherein said stabilizer comprises a composition having the formula: 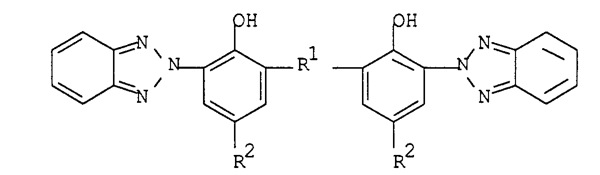 wherein R¹ is an alkylene bridging group and the groups R² are alkyl groups.

6. A composition as claimed in claim 5, wherein R¹ is a methylene group and R² are C₁₋₈ alkyl groups.

7. A composition as claimed in any of claims 1-6, wherein the polyketone polymer is a linear alternating polymer of carbon monoxide with ethene and optionally another ethylenically unsaturated compound, in particular propene or butene-1.

8. A composition as claimed in any of claims 1-7, wherein the said stabilizer is present in a quantity of 0.2-5 wt%, in particular 0.4-2 wt%, based on the weight of the polyketone polymer.

9. A process comprising intimately mixing a polyketone polymer which is a linear alternating polymer of carbon monoxide and an ethylenically unsaturated hydrocarbon, having a limiting viscosity number from 0.5 dl/g to 10 dl/g measured in m-cresol at 60°C, with a stabilizing quantity of a stabilizer as defined in claim 1.

10. The use of a stabilizer having at least two ultraviolet dissipating functional groupings in its molecular structure for improving the UV stability of a polyketone polymer which is a linear alternating polymer of carbon monoxide and an ethylenically unsaturated hydrocarbon, having a limiting viscosity number from 0.5 dl/g to 10 dl/g measured in m-cresol at 60°C, which ultraviolet absorbing dissipating functional groupings are selected from the group consisting of hydroxybenzotriazoles, hydroxybenzophenones, oxanilides, diphenyl cyanoacrylates, phenyl salicylates, hydroxyphenyltriazines and combinations thereof.

## Patentansprüche (Patentansprüche für folgende(n) Vertragsstaat(en): DE, FR, GB, IT, NL)

1. Polymerzusammensetzung, umfassend ein Polyketonpolymer, das ein lineares alternierendes Polymer aus Kohlenmonoxid und einem ethylenisch ungesättigten Kohlenwasserstoff mit einer Grenzviskositätszahl [bestimmt in m-Cresol bei 60°C] von 0,5 dl/g bis 10 dl/g ist, und innig damit vermischt eine stabilisierende Menge eines Stabilisators, der wenigstens zwei UV-absorbierende-dissipierende funktionelle Gruppierungen in seiner Molekularstruktur aufweist, welche UV-absorbierenden-dissipierenden funktionellen Gruppierungen aus der Gruppe ausgewählt sind, die aus Hydroxybenzotriazolen, Hydroxybenzophenonen, Oxaniliden, Diphenylcyanoacrylaten, Phenylsalicylaten, Hydroxyphenyltriazinen und Kombinationen hievon besteht.

2. Zusammensetzung nach Anspruch 1, worin jede der Ultraviolett-absorbierenden-dissipierenden funktionellen Gruppierungen gleich ist.

3. Zusammensetzung nach Anspruch 1 oder 2, worin der Stabilisator zwei Ultraviolett-absorbierende-dissipierende funktionelle Gruppierungen umfaßt.

4. Zusammensetzung nach einem der Ansprüche 1 bis 3, worin die Ultraviolett-absorbierenden-dissipierenden funktionellen Gruppierungen aus der aus 1-(Benzotriazol-2-yl)-2-hydroxyarenen bestehenden Gruppe ausgewählt sind.

5. Zusammensetzung nach einem der Ansprüche 1 bis 4, worin der Stabilisator eine Zusammensetzung mit der Formel: 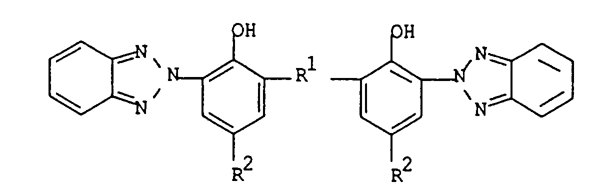 umfaßt, worin R¹ eine Alkylenbrückengruppe ist und die Gruppen R² Alkylgruppen darstellen.

6. Zusammensetzung nach Anspruch 5, worin R¹ eine Methylengruppe ist und R² C₁₋₈ Alkylgruppen sind.

7. Zusammensetzung nach einem der Ansprüche 1 bis 6, worin das Polyketonpolymer ein lineares alternierendes Polymer aus Kohlenmonoxid mit Ethen und gegebenenfalls einer weiteren ethylenisch ungesättigten Verbindung, insbesondere Propen oder Buten-1, ist.

8. Zusammensetzung nach einem der Ansprüche 1 bis 7, worin der Stabilisator in einer Menge von 0,2 bis 5 Gew.-%, insbesondere 0,4 bis 2 Gew.-%, bezogen auf das Gewicht des Polyketonpolymers, zugegen ist.

9. Ein Verfahren, umfassend ein inniges Vermischen eines Polyketonpolymers, das ein lineares alternierendes Polymer aus Kohlenmonoxid und einem ethylenisch ungesättigten Kohlenwasserstoff mit einer Grenzviskositätszahl von 0,5 dl/g bis 10 dl/g [bestimmt in m-Cresol bei 60°C] ist, mit einer stabilisierenden Menge eines Stabilisators, wie in Anspruch 1 definiert.

10. Anwendung eines Stabilisators, der in seiner Molekularstruktur wenigstens zwei Ultraviolett-dissipierende funktionelle Gruppierungen aufweist, zur Verbesserung der UV-Stabilität eines Polyketonpolymers, das ein lineares alternierendes Polymer aus Kohlenmonoxid und einem ethylenisch ungesättigten Kohlenwasserstoff mit einer Grenzviskositätszahl von 0,5 dl/g bis 10 dl/g [bestimmt in m-Cresol bei 60°C] ist, welche Ultraviolett-absorbierendendissipierenden funktionellen Gruppierungen aus der Gruppe ausgewählt sind, die aus Hydroxybenzotriazolen, Hydroxybenzophenonen, Oxaniliden, Diphenylcyanoacrylaten, Phenylsalicylaten, Hydroxyphenyltriazinen und deren Kombinationen besteht.

## Revendications (Revendications pour l'(les) Etat(s) contractant(s) suivant(s): DE, FR, GB, IT, NL)

1. Composition de polymère comprenant un polymère de polycétone qui est un polymère alterné linéaire de monoxyde de carbone et d'un hydrocarbure éthyléniquement insaturé, ayant un indice de viscosité limite mesuré dans du m-crésol à 60°C de 0,5 dl/g à 10 dl/g, et intimement mélangée à celui-ci une quantité stabilisante d'un stabilisant comportant au moins deux groupement fonctionnels absorbant-dissipant l'ultraviolet dans sa structure moléculaire, lesquels groupements fonctionnels absorbant dissipant l'ultraviolet sont choisis dans le groupe comprenant les hydroxybenzotriazoles, les hydroxybenzophénones, les oxanilides, les diphényl cyanoacrylates, les phényl salicylates, les hydroxyphényltriazines et leurs combinaisons.

2. Composition suivant la revendication 1, dans laquelle chacun des groupements fonctionnels absorbant-dissipant l'ultraviolet précités est le même.

3. Composition suivant l'une ou l'autre des revendications 1 et 2, dans laquelle le stabilisant précité comprend deux groupements fonctionnels absorbant-dissipant l'ultraviolet.

4. Composition suivant l'une quelconque des revendications 1 à 3, dans laquelle les groupements fonctionnels absorbant dissipant l'ultraviolet sont choisis dans le groupe comprenant les 1-(benzotriazol-2-yl)-2-hydroxyarènes.

5. Composition suivant l'une quelconque des revendications 1 à 4, dans laquelle ledit stabilisant comprend une composition ayant la formule : 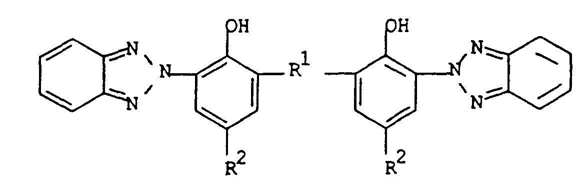 dans laquelle R¹ est un groupe de pontage d'alkylène et les groupes R² sont des groupes alkyle.

6. Composition suivant la revendication 5, dans laquelle R¹ est un groupe méthylène et les R² sont des groupes alkyle en C₁₋₈.

7. Composition suivant l'une quelconque des revendications 1 à 6, dans laquelle le polymère de polycétone est un polymère alterné linéaire de monoxyde de carbone avec de l'éthène et éventuellement un autre composé éthyléniquement insaturé, en particulier le propène ou le butène-1.

8. Composition suivant l'une quelconque des revendications 1 à 7, dans laquelle le stabilisant est présent en une quantité de 0,2-5 % en poids, en particulier 0,4-2 % en poids, par rapport au poids du polymère de polycétone.

9. Procédé de mélange intime d'un polymère de polycétone qui est un polymère alterné linéaire de monoxyde de carbone et d'un hydrocarbure éthyléniquement insaturé, ayant un indice de viscosité limite de 0,5 dl/g à 10 dl/g mesuré dans du m-crésol à 60°C, avec une quantité stabilisante d'un stabilisant tel que défini dans la revendication 1.

10. Utilisation d'un stabilisant comportant au moins deux groupements fonctionnels dissipant l'ultraviolet dans sa structure moléculaire pour améliorer la stabilité U.V. d'un polymère de polycétone qui est polymère alterné linéaire de monoxyde de carbone et d'un hydrocarbure éthyléniquement insaturé, ayant un indice de viscosité limite de 0,5 dl/g à 10 dl/g mesuré dans du m-crésol à 60°C, lesquels groupements fonctionnels absorbant dissipant l'ultraviolet sont choisis dans le groupe comprenant les hydroxybenzotriazoles, les hydroxybenzophénones, les oxanilides, les diphényl cyanoacrylates, les phényl salicylates, les hydroxyphényltriazines et leurs combinaisons.
